# EUROPEAN PATENT SPECIFICATION

(11) **EP 3 182 574 B1**
(45) Date of publication and mention of the grant of the patent: **04.11.2020**
(21) Application number: 16204422.6
(22) Date of filing: 15.12.2016
(51) Int. Cl.: H02M 1/42

(54) **CONVERTER UNIT, DRIVE CONTROLLER, MOTOR, AND COMPRESSOR**
WANDLEREINHEIT, ANTRIEBSSTEUERGERÄT, MOTOR UND KOMPRESSOR
UNITÉ DE CONVERTISSEUR, CONTRÔLEUR D'ENTRAÎNEMENT, MOTEUR ET COMPRESSEUR

(30) Priority: 18.12.2015 JP 2015246851
(43) Date of publication of application: 21.06.2017
(73) Proprietor: Mitsubishi Heavy Industries, Ltd., Tokyo 108-8215 (JP)
(72) Inventor: SHIMIZU, Kenji, MINATO-KU, TOKYO, 108-8215 (JP); SUMITO, Kiyotaka, MINATO-KU, TOKYO, 108-8215 (JP); SATOU, Takesi, MINATO-KU, TOKYO, 108-8215 (JP); MIYATA, Masayuki, NAGOYA, AICHI, 453-0862 (JP)
(74) Representative: Cabinet Beau de Loménie

(56) References cited:
- EP-A1- 2 866 341
- EP-A1- 2 924 861
- WO-A1-2014/158162
- US-A1- 2007 279 955
- US-A1- 2010 156 377

## Description

### BACKGROUND OF THE INVENTION

### Field of the Invention

The present invention relates to a converter unit that includes a switching device in a rectification section to suppress power line harmonics, and relates to a drive controller, a motor, and a compressor each including the converter unit.

### Description of the Related Art

An inverter unit supplying a drive current to a load such as a motor includes: a converter section configured to convert an alternating current from an alternating current power supply into a direct current; an inverter section configured to convert the direct current supplied from the converter section into an alternating current and to supply the alternating current to the load; and a control section. The control section performs pulse width modulation (PWM) control or pulse amplitude modulation (PAM) control which is aimed to suppress input current harmonics, and thereby a drive current with an appropriate voltage and frequency is supplied to the load.

Along with downsizing and improvement in performance of a product using the inverter unit, a frequency of a carrier wave (a carrier frequency) that is reference of harmonic suppression control is increased, and for example, a carrier frequency of about 15 kHz to about 35 kHz is used.

The converter section typically includes a reactor connected to an alternating current power supply, a plurality of rectifier diodes, and a smoothing capacitor.

There is a case in which, as a harmonic countermeasure, to suppress a harmonic current generated by the converter section, a semiconductor switching device is connected in parallel to the rectifier diodes and the switching devices are switched on and off to bring the waveform close to a sine wave (for example, JP 3-3664 or US 2007/279955).

At present, in a harmonic suppression control section in the converter unit, a carrier wave of high frequency is mainly used. However, when the frequency of the carrier wave is high, drastic surge generated in the waveform by each switching is increased. Accordingly, to sufficiently suppress noise caused by the surge, a high-specification noise filter is practically necessary, in addition to the switching devices connected in parallel to the rectifier diodes in JP 3-3664 A.

Such noise countermeasures are high in cost, and if the frequency continues to increase, the noise filter may cause upsizing. Thus, it is limited to confine the noise countermeasure to the size of the controller.

Moreover, the switching device necessary for the noise countermeasures is accompanied with loss every time being switched on and off. Thus, higher frequency may increase switching loss.

Accordingly, it is an object of the present invention to sufficiently take countermeasures against noise at low cost and to improve efficiency with less loss in a converter unit that includes a switching device in a rectification section to suppress power line harmonics.

### SUMMARY OF THE INVENTION

A converter unit according to the present invention includes: a reactor connected to an alternating current power supply; a converter circuit including a rectifying device and a switching device that is connected in parallel to the rectifying device; a drive section configured to drive the converter circuit; a smoothing capacitor configured to smooth a current outputted from the converter circuit; and a control section configured to use a carrier wave of a frequency equal to or lower than 10 kHz to control the drive section. The control section uses both a signal wave of a modulation factor corresponding to a load and the carrier wave to generate a PWM signal, and provides the PWM signal to the drive section. In addition, the control section does not perform PWM converter control to turn on and off the switching device in a low load region in which the load is relatively low, and performs the PWM converter control in a high load region in which the load is relatively high.

The converter unit according to the present invention may further include an input current detection section that is configured to detect an input current to the converter circuit, and the control section does not perform the PWM converter control in the low load region in which the input current is relatively small, and performs the PWM converter control in the high load region in which the input current is relatively large.

In the converter unit according to the present invention, the input current at a time of switching from an ON state in which the PWM converter control is performed to an OFF state in which the PWM converter control is not performed may be preferably smaller than the input current at a time of switching from the OFF state in which the PWM converter control is not performed to the ON state in which the PWM converter control is performed.

The converter unit according to the present invention may further include a phase detection section configured to detect a phase of the alternating current power supply, and the control section may preferably use the detected phase to generate a PWM signal that is synchronized with or shifted from the phase of the alternating current power supply.

In the converter unit according to the present invention, the control section variably set the modulation factor depending on the load or the input current.

In the converter unit according to the present invention, the switching device may be preferably connected in parallel to each of a pair of the rectifying devices, and the pair of the switching devices may be preferably each supplied with the same PWM signal from the drive section.

In the converter unit according to the present invention, the switching device may be preferably connected in parallel to each of a pair of the rectifying devices, and the control section may preferably turn on one of the pair of the switching devices over an entire segment in which the PWM converter control is performed for the other switching device.

The converter unit according to the present invention may further include an input voltage detection section configured to detect an input voltage to the converter circuit, and the control section may preferably set an upper limit of the modulation factor based on the input voltage.

A drive controller according to the present invention includes: the above-described converter unit; and an inverter section configured to convert a direct current supplied from the converter unit into an alternating current to supply the alternating current to a load.

In the drive controller according to the present invention, the load is a motor used in a compressor configuring an air conditioner.

A motor according to the present invention includes the above-described drive controller.

A compressor according to the present invention includes: the above-described motor; a compression mechanism configured to be driven by the motor to compress a fluid; and a housing that houses the motor and the compression mechanism.

In the compressor according to the present invention, the control section may not preferably perform the PWM converter control when a rotation speed of the compression mechanism is relatively low, and may preferably perform the PWM converter control when the rotation speed is relatively high.

The compressor according to the present invention may preferably configure an air conditioner.

According to the present invention, there is provided a method of controlling a converter unit. The converter unit includes a reactor connected to an alternating current power supply, a converter circuit including a rectifying device and a switching device that is connected in parallel to the rectifying device, a smoothing capacitor configured to smooth a current outputted from the converter circuit, and a control section configured to control a drive section that drives the converter circuit. The method includes: generating a PWM signal with use of both a signal wave of a modulation factor corresponding to a load and a carrier wave of a frequency equal to or lower than 10 kHz, and driving the converter circuit; and performing PWM converter control to turn on and off the switching device in a high load region in which the load is relatively high without performing PWM converter control in a low load region in which the load is relatively low.

In the method of controlling the converter unit according to the present invention, the PWM converter control may not be preferably performed in a low load region in which an input current to the converter circuit is relatively small, and may be preferably performed in the high load region in which the input current is relatively large.

According to the present invention, since the carrier wave of a low frequency is used for the control of suppressing the power line harmonics, it is possible to sufficiently reduce noise caused by surge and to use an inexpensive reactor having large inductance for the converter unit, unlike a case in which the frequency of the carrier wave is high. Accordingly, even if switching in the low load region is eliminated, it is possible to suppress harmonics within an allowable range.

In the high load region, the switching is performed in order to suppress harmonics; however, the noise is sufficiently reduced as mentioned above because of a low carrier frequency in the harmonic suppression control. Thus, an expensive noise filter for high-frequency switching is unnecessary.

In addition, the number of switching per unit time is decreased because of a low carrier frequency in the harmonic suppression control. This makes it possible to suppress switching loss of the switching device. Since the switching device is not switched in the low load region, switching loss by the switching device does not occur.

Consequently, according to the present invention, using the carrier wave of a low frequency in the harmonic suppression control makes it possible to sufficiently take countermeasures against noise at low cost while the harmonics are suppressed within the allowable range, and to improve efficiency with less loss.

### BRIEF DESCRIPTION OF THE DRAWINGS

FIG. 1 is a diagram illustrating a drive controller including a converter unit according to an embodiment of the present invention;
FIGS. 2A and 2B are diagrams for explaining generation of a PWM signal;
FIGS. 3A and 3B are diagrams for explaining a case in which a modulation factor is larger than a modulation factor illustrated in FIGS. 2A and 2B;
FIGS. 4A and 4B are diagrams each illustrating a relationship between a phase of an alternating current power supply and a phase of the PWM signal;
FIG. 5 is a diagram illustrating hysteresis provided to switching between an ON state and an OFF state of the PWM converter control;
FIG. 6 is a diagram illustrating a drive controller including a converter unit according to a modification of the present invention;
FIGS. 7A and 7B are diagrams each illustrating the PWM signals provided to drive sections;
FIG. 8 is a diagram illustrating a drive controller including a converter unit according to another modification of the present invention; and
FIG. 9 is a schematic diagram illustrating an electric compressor including the drive controller illustrated in FIG. 1.

### DETAILED DESCRIPTION OF THE PREFERRED EMBODIMENTS

Hereinafter, some embodiments of the present invention are described with reference to accompanying drawings.

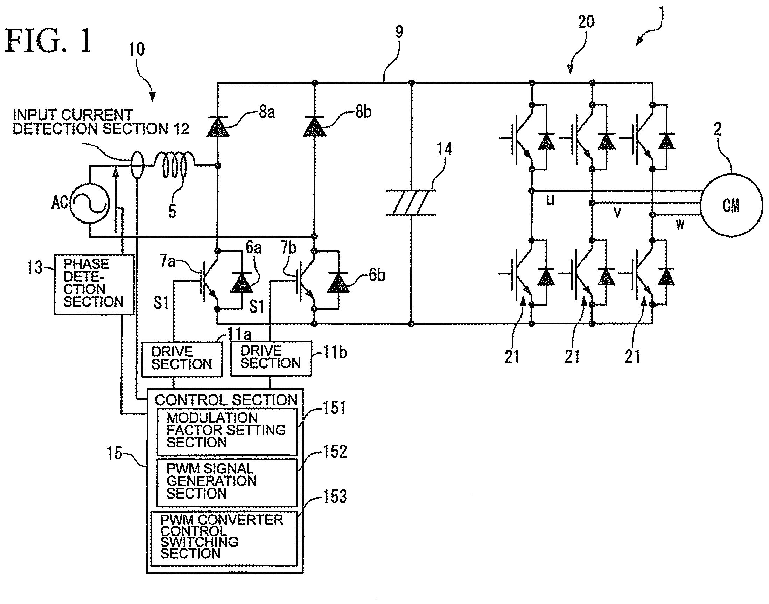

A drive controller 1 for a motor illustrated in FIG. 1 includes a converter section 10 (a converter unit) that converts an alternating current into a direct current, and an inverter section 20 that converts the direct current supplied from the converter section 10 into an alternating current and supplies the alternating current to a motor 2 (a load).

The motor 2 is an alternating current motor such as a permanent magnet synchronous motor and an induction motor.

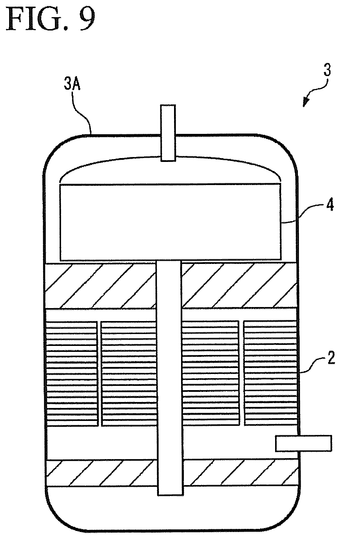

The motor 2 may be applied to a compressor 3 illustrated in FIG. 9. The compressor 3 includes the motor 2, the drive controller 1 driving and controlling the motor 2, a compression mechanism 4 that is driven by the motor 2 to compress a refrigerant, and a housing 3A that houses the motor 2 and the compression mechanism 4. The compressor 3 constitutes an air conditioner.

The inverter section 20 includes semiconductor switching devices 21 that respectively correspond to a u-phase winding, a v-phase winding, and a w-phase winding provided in the motor 2.

The inverter section 20 supplies, to windings u, v, and w, drive currents that are generated by switching of the respective semiconductor switching devices 21.

The configuration of the converter section 10 is described below.

The converter section 10 includes: a reactor 5; a converter circuit 9 including rectifier diodes 6a and 6b, switching devices 7a and 7b, and high-speed diodes 8a and 8b; drive sections 11a and 11b driving the converter circuit 9; an input current detection section 12; a phase detection section 13; a smoothing capacitor 14; and a control section 15 that supplies a PWM signal to each of the drive sections 11a and 11b to perform PWM converter control for suppressing power line harmonics.

The reactor 5 is connected to an alternating current power supply AC in order to improve a power factor.

An inexpensive reactor that has inductance greater than that of a typical reactor used in the converter circuit 9 is used as the reactor 5. The typical reactor has inductance of, for example, 0.1 to 0.5 mH that covers a high frequency of the PWM signal, whereas the reactor 5 has inductance several tens to several hundred times greater than the inductance of the typical reactor, namely, has inductance of about several mH to about several tens of mH.

The pair of rectifier diodes 6a and 6b rectify an alternating current that flows alternately therethrough.

The pair of switching devices 7a and 7b are respectively connected in parallel to the rectifier diodes 6a and 6b.

Examples of the switching devices 7a and 7b may include a semiconductor switching device such as an insulated gate bipolar transistor (IGBT) and a metal-oxide-semiconductor field-effect transistor (MOSFET). Examples of the switching devices 7a and 7b may further include, in addition to a typical MOSFET using Si, an SJ-MOSFET (an MOSFET having a super junction structure) using Si, and a wide-gap semiconductor using SiC, GaN, Ga₂O₃, or the like.

The high-speed diode 8a is connected in series to the rectifier diode 6a and the switching device 7a. The high-speed diode 8b is connected in series to the rectifier diode 6b and the switching device 7b. The high-speed diodes 8a and 8b each has fast recovery characteristics in which reversible recovery time (reverse recovery time) is short.

The drive sections 11a and 11b supplies the PWM signal respectively to the switching devices 7a and 7b to drive the converter circuit 9.

The input current detection section 12 detects a current supplied to the converter circuit 9.

The phase detection section 13 detects a phase of the alternating current power supply AC.

The smoothing capacitor 14 smooths a current outputted from the converter circuit 9.

The control section 15 generates the PWM signal and supplies the PWM signal to each of the drive sections 11a and 11b to turn on and off the switching devices 7a and 7b, thereby switching whether to perform the PWM converter control for suppressing the power line harmonics, in response to the input current detected by the input current detection section 12.

The control section 15 uses a carrier wave (a carrier) of a frequency equal to or lower than 10 kHz. is The control section 15 of the present embodiment employs a carrier wave of several kHz.

The control section 15 includes a modulation factor setting section 151 setting a modulation factor corresponding to the load, a PWM signal generation section 152 generating the PWM signal, and a PWM converter control switching section 153 switching whether to perform the PWM converter control.

The modulation factor setting section 151 variably set the modulation factor according to the load. The modulation factor setting section 151 may variably set the modulation factor according to the input current detected by the input current detection section 12, instead of the load. The "modulation factor" is a ratio of an amplitude of a signal wave to an amplitude of the carrier wave.

In the case of the permanent magnet synchronous motor, larger inverter output is necessary as rotation speed of the motor increases because an induced voltage is increased with the increase of the rotation speed. Also, the direct current voltage tends to be largely dropped as the load increases or the input current increases. Variable setting of the modulation factor makes it possible to deal with such circumstances.

The PWM signal generation section 152 uses both the signal wave of the set modulation factor and the carrier wave to generate the PWM signal.

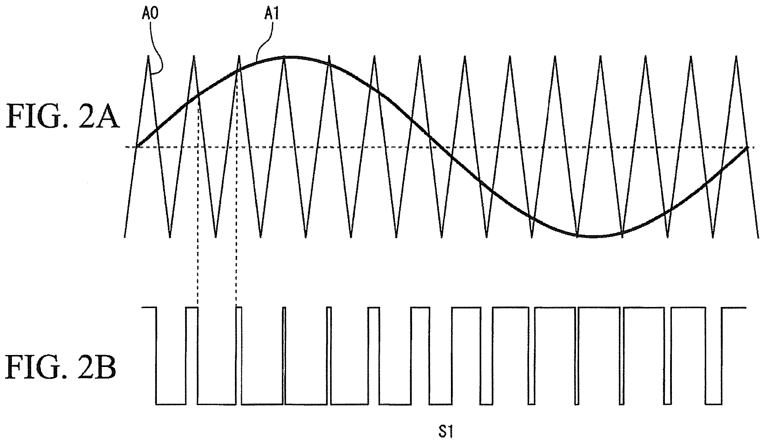

FIG. 2A illustrates a carrier wave A0 that is a triangle wave, and a signal wave A1 that is a sine wave. The carrier wave A0 may be a sawtooth wave.

As mentioned above, the frequency of the carrier wave A0 is several kHz. A frequency of the signal wave A1 is a power supply frequency of a commercial power supply (the alternating current power supply AC). The modulation factor of the signal wave A1 to the carrier wave A0 is substantially one.

The PWM signal generation section 152 compares the carrier wave A0 with the signal wave A1, and generates a PWM signal S1 that is off during a time period in which the voltage of the signal wave A1 is larger than the voltage of the carrier wave A0. As illustrated in FIG. 2B, the PWM signal S1 variable in pulse width is generated at the frequency same as that of the carrier wave A0.

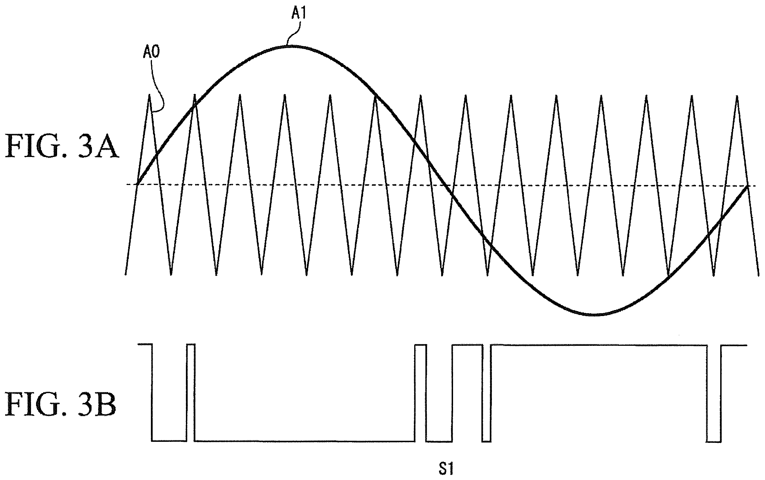

FIGS. 3A and 3B each illustrate a case in which the modulation factor of the signal wave A1 is larger than the modulation factor of the signal wave A1 illustrated in FIGS. 2A and 2B. Also in this case, the PWM signal generation section 152 generates the PWM signal S1 that is ON during a time period in which the voltage of the signal wave A1 is larger than the voltage of the carrier wave A0, as above.

The PWM signal S1 may be preferably set to a predetermined phase by the PWM signal generation section 152. This makes it possible to improve a power factor.

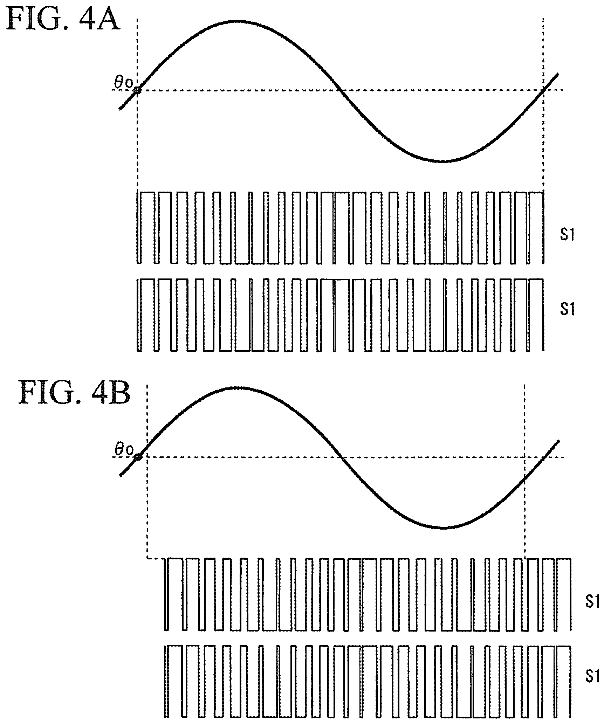

The PWM signal generation section 152 may generate the PWM signal S1 that is synchronized with zero-cross θ₀ of a power supply phase as illustrated in FIG. 4A or is shifted from the zero-cross θ₀ of the power supply phase as illustrated in FIG. 4B, based on the power supply phase detected by the phase detection section 13.

The PWM converter control switching section 153 (FIG. 1) determines whether to perform the PWM converter control to turn on and off the switching devices 7a and 7b of the converter circuit 9, based on the input current detected by the input current detection section 12. The PWM converter control switching section 153 supplies the PWM signal S1 or a full-off signal to each of the switching devices 7a and 7b, based on the determination result.

Action of the PWM converter control to turn on and off the switching devices 7a and 7b is described.

When the switching device 7a is on, the alternating current power supply AC is shortcircuited by the switching device 7a and the rectifier diode 6b through the reactor 5. The charges accumulated in the reactor 5 at this time are discharged to the smoothing capacitor 14 through the rectifier diode 6a and the switching device 7b when the switching device 7a is off. The direct current voltage outputted from the converter circuit 9 is accordingly increased to come close to a sine wave.

The switching devices 7a and 7b are provided in order to bring the waveform of the direct current close to a sine wave by being turned on and off (the PWM converter control) to reduce harmonics. However, when the frequency of the carrier wave of the PWM converter control is high, noise caused by surge may be increased.

Here, a case in which the switching of the switching devices 7a and 7b is not performed is described. The PWM signal S1 that is supplied from the PWM signal generation section 152 to the converter circuit 9 through the drive sections 11a and 11b has distortion larger than that in a case in which the switching is performed. In the present embodiment, however, since the inductance of the reactor 5 is large as mentioned above, the distortion is moderated by the action of the reactor 5, which may suppress the harmonics within an allowable range (a restriction range) in a low-current region.

Accordingly, the PWM converter control switching section 153 determines whether to perform the PWM converter control to turn on and off the switching devices 7a and 7b, namely, determines necessity of the PWM converter control based on the input current detected by the input current detection section 12.

Then, in a low load region in which the input current is relatively small, a continuous off signal (a full-off signal) is supplied to each of the drive sections 11a and 11b because the PWM converter control is not performed. As a result, the switching device 7a and 7b are not switched on and off. In other words, the switching devices 7a and 7b do not function in the low load region.

In contrast, in a high load region in which the input current is relatively large, the PWM signal S1 is supplied to the drive sections 11a and 11b in order to perform the PWM converter control. As a result, the switching devices 7a and 7b are switched on and off.

Thus, the full-off signal indicates the OFF state of the PWM converter control, and the PWM signal S1 indicates the ON state of the PWM converter control.

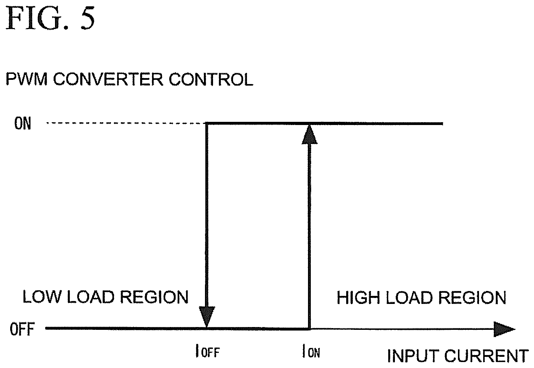

Although the ON state and the OFF state of the PWM converter control are switched over in response to a predetermined current value as a threshold, the switching between the ON state and the OFF state of the PWM converter control may preferably include hysteresis, as illustrated in FIG. 5.

In this case, as illustrated in FIG. 5, the input current I_{OFF} in switching from the ON state to the OFF state is smaller than the input current I_{ON} in switching from the OFF state to the ON state.

This makes it possible to prevent the ON-OFF state of the PWM converter control from hunting when the input current varies between I_{ON} and I_{OFF}.

According to the present embodiment, since the carrier wave of a low frequency is used for the control to suppress the power line harmonics, it is possible to sufficiently reduce noise caused by surge, and to use the inexpensive reactor 5 having large inductance for the converter section 10, unlike a case in which the frequency of the carrier wave is high. Thus, it is possible to suppress generation of the harmonics within the allowable range even if the switching in the low load region is eliminated.

In the high load region, the switching is performed in order to suppress the harmonics. However, since the noise is sufficiently reduced because of the low frequency of the carrier wave in the harmonic suppression control, an expensive noise filter for high-frequency switching is unnecessary.

The compressor 3 including the drive controller 1 according to the present embodiment complies with IEC61000-3-2 that is an international standard concerning a harmonic current.

In addition, in the present embodiment, the number of switching per unit time is decreased due to the low frequency of the carrier wave in the harmonic suppression control. Accordingly, it is possible to suppress switching loss in the switching devices 7a and 7b. Since the switching devices 7a and 7b are not switched in the low load region, such switching loss does not occur.

Thus, according to the present embodiment, it is possible to achieve sufficient harmonic countermeasure at low cost while suppressing the harmonics within the allowable range, and to improve efficiency with less loss.

As mentioned above, according to the present embodiment, it is possible to reduce the harmonics that do not contribute to performance, and to suppress switching loss. Thus, in particular, efficiency in the low load region is high.

This is meaningful in the motor 2 to be applied to the compressor for an air conditioner, in terms of annual energy consumption (APF) that is an evaluation index for an air conditioner complying with JIS C9612. This is because the APF indicates a ratio of a total sum of heat quantity removed from room air and heat quantity provided to the room air during a predetermined cooling period and a predetermined warming period versus a total sum of electric power consumed during the same periods, and is calculated by weighting the operation in low-speed region in which operation frequency is high. In other words, efficiency in the low load region is important in the driving control of the motor 2 that operates the compressor 3 of the air conditioner.

Further, an enclosure of an air conditioner housing the compressor 3 and the drive controller 1 mercifully has a sufficient space for housing the reactor 5 that has a size corresponding to the magnitude of the inductance.

The configuration of the converter unit according to the present invention is not limited to the configuration of the converter section 10 described above, and devices and wire connection to be used may be appropriately modified.

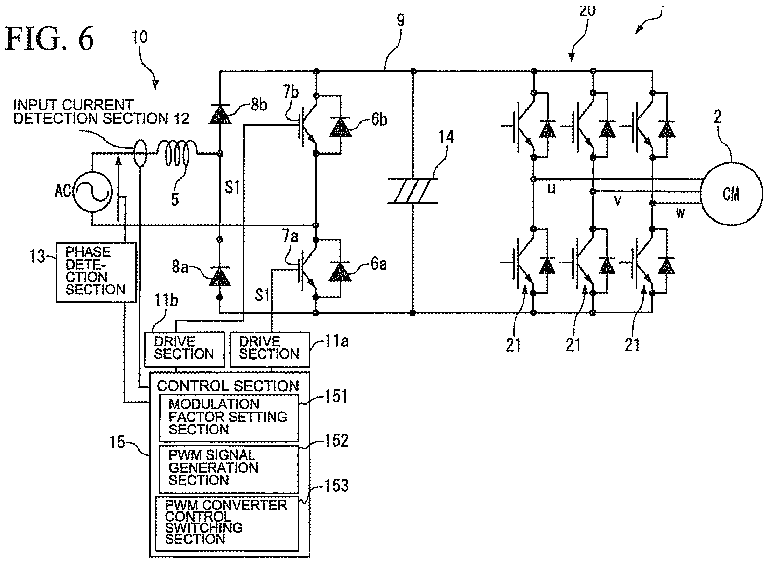

The switching devices 7a and 7b according to the above-described embodiment are disposed horizontally in the circuit illustrated in FIG. 1. Alternatively, as illustrated in FIG. 6, the switching devices 7a and 7b may be disposed vertically. In the case of the configuration illustrated in FIG. 6, the diodes 8a and 8b are not required to have the fast recovery characteristics.

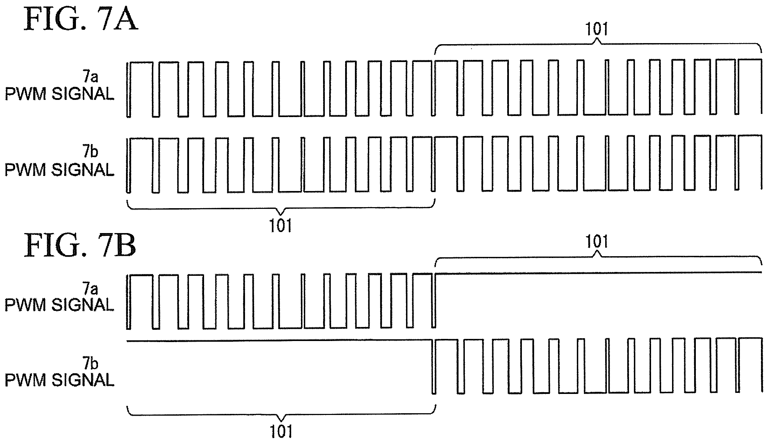

As illustrated in FIG. 7A, it is possible to form the PWM signals S1 and S1 respectively provided to the switching devices 7a and 7b in the same waveform. In the ON state of the PWM converter control, the switching devices 7a and 7b are alternately switched according to the power supply frequency. Thus, the respective PWM signals provided to the switching devices 7a and 7b each include a signal segment 101 that is not used because the switching device is off. The same PWM signal S1 including the signal segment 101 is provided to each of the switching devices 7a and 7b.

Forming the PWM signals S1 and S1 in the same waveform makes it possible to commonalize the output of the control section 15 and the drive sections 11a and 11b, which saves cost and achieves downsizing.

Further, as illustrated in FIG. 7B, the PWM signal S1 (the above-described signal segment 101) of one (7b or 7a) of the switching devices 7a and 7b may be on over an entire period (the signal segment 101) in which the other switching device (7a or 7b) is switched on and off. If an FET is used for the switching devices 7a and 7b, it is possible to reduce loss by synchronous rectification effect.

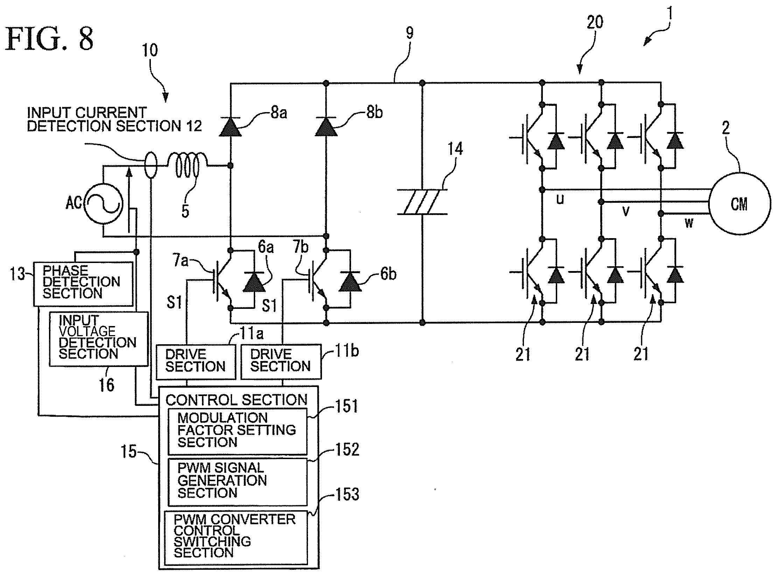

FIG. 8 illustrates the converter section 10 that includes an input voltage detection section 16 detecting the voltage supplied to the converter circuit 9. Defining the upper limit of the modulation factor by the control section 15 according to the input voltage detected by the input voltage detection section 16 may protect the drive controller 1 from an excessive regenerative voltage when the motor 2 is stopped. The upper limit of the modulation factor may be increased with an increase in rotation speed of the motor 2.

In addition those mentioned above, the configuration described in the above-described embodiment may be selected or appropriately modified without departing from the scope of the present invention.

The converter unit according to the present invention may be widely used as a power supply of, for example, lighting, a heater, a computer, and a home appliance, in addition to the power supply of the motor operating the compressor of the air conditioner.

## Claims

1. A drive controller (1) comprising:
a converter unit (10) and an inverter section (20) configured to convert a direct current supplied from the converter unit (10) into an alternating current to supply the alternating current to a load (2),
said converter unit (10) comprising:
a reactor (5) connected to an alternating current power supply (AC);
a converter circuit (9) including two rectifying devices (6a, 6b) and two switching devices (7a, 7b) each switching device (7a, 7b) being connected in parallel to one rectifying device (6a, 6b);
a drive section (11a, 11b) configured to drive the converter circuit (9);
a smoothing capacitor (14) configured to smooth a current outputted from the converter circuit (9); and
a control section (15) configured to use a carrier wave of a frequency equal to or lower than 10 kHz to control the drive section (11a, 11b), wherein
the control section (15) uses both a signal wave (A1) of a modulation factor corresponding to a load (2) and the carrier wave (A0) to generate a PWM signal (S1), and provides the PWM signal (S1) to the drive section (11a, 11b) to perform PWM converter control for suppressing power line harmonics, and
the control section (15) does not perform PWM converter control to turn on and off the switching device (7a, 7b) in a low load region in which the load (2) is relatively low, and performs the PWM converter control in a high load region in which the load (2) is relatively high.

2. The drive controller (1) according to claim 1, further comprising an input current detection section (12) configured to detect an input current to the converter circuit (9), wherein
the control section (15) does not perform the PWM converter control in the low load region in which the input current is relatively small, and performs the PWM converter control in the high load region in which the input current is relatively large.

3. The drive controller (1) according to claim 2, wherein the input current at a time of switching from an ON state in which the PWM converter control is performed to an OFF state in which the PWM converter control is not performed is smaller than the input current at a time of switching from the OFF state in which the PWM converter control is not performed to the ON state in which the PWM converter control is performed.

4. The drive controller (1) according to any one of claims 1 to 3, further comprising a phase detection section (13) configured to detect a phase of the alternating current power supply (AC), wherein
the control section (15) uses the detected phase to generate the PWM signal (S1) that is synchronized with or shifted from the phase of the alternating current power supply (AC).

5. The drive controller (1) according to any one of claims 1 to 4, wherein the control section variably sets the modulation factor depending on the load (2) or the input current.

6. The drive controller (1) according to any one of claims 1 to 5, wherein
the switching device (7a, 7b) is connected in parallel to each of a pair of the rectifying devices (6a, 6b), and
the pair of the switching devices (7a, 7b) are each supplied with the same PWM signal (S1) from the drive section (11a, 11b).

7. The drive controller (1) according to any one of claims 1 to 6, wherein
the switching device (7a, 7b) is connected in parallel to each of the pair of the rectifying devices (6a, 6b), and
the control section (15) turns on one of the pair of the switching devices (7a, 7b) over an entire segment in which the PWM converter control is performed on the other switching device (7a, 7b).

8. The drive controller (1) according to any one of claims 1 to 7, further comprising an input voltage detection section (16) configured to detect an input voltage to the converter circuit (9), wherein
the control section (15) sets an upper limit of the modulation factor based on the input voltage.

9. The drive controller according to any one of claims 1 to 8, wherein the load is a motor used in a compressor constituting an air conditioner.

10. A motor comprising the drive controller according to any one of claims 1 to 9.

11. A compressor comprising:
the motor according to claim 10;
a compression mechanism configured to be driven by the motor to compress a fluid; and
a housing that houses the motor and the compression mechanism.

12. The compressor according to claim 11, wherein the control section does not perform the PWM converter control when a rotation speed of the compression mechanism is relatively low, and performs the PWM converter control when the rotation speed is relatively high.

13. The compressor according to claim 11 or 12, wherein the compressor constitutes an air conditioner.

14. A method of controlling a converter unit, the converter unit including a reactor connected to an alternating current power supply, a converter circuit including a rectifying device and a switching device that is connected in parallel to the rectifying device, a smoothing capacitor configured to smooth a current outputted from the converter circuit, and a control section configured to control a drive section that drives the converter circuit, the method comprising:
generating a PWM signal, for suppressing power line harmonics, with use of both a signal wave of a modulation factor corresponding to a load and a carrier wave of a frequency equal to or lower than 10 kHz, and driving the converter circuit; and
performing PWM converter control to turn on and off the switching device in a high load region in which the load is relatively high without performing the PWM converter control in a low load region in which the load is relatively low.

15. The method of controlling the converter unit according to claim 14, wherein the PWM converter control is not performed in the low load region in which an input current to the converter circuit is relatively small, and the PWM converter control is performed in the high load region in which the input current is relatively large.

## Patentansprüche

1. Antriebssteuerung (1), die Folgendes umfasst:
eine Wandlereinheit (10) und einen Stromrichterbereich (20), die dazu ausgelegt sind, einen Gleichstrom, der von der Wandlereinheit (10) zugeführt wird, in einen Wechselstrom umzuwandeln, um den Wechselstrom einer Last (2) zuzuführen,
wobei die Wandlereinheit (10) Folgendes umfasst:
eine Drossel (5), die mit einer Wechselstromversorgung (AC) verbunden ist;
eine Wandlerschaltung (9), die zwei Gleichrichtervorrichtungen (6a, 6b) und zwei Schaltvorrichtungen (7a, 7b) beinhaltet, wobei jede Schaltvorrichtung (7a, 7b) mit einer Gleichrichtervorrichtung (6a, 6b) parallel geschaltet ist;
einen Ansteuerbereich (11a, 11b), der dazu ausgelegt ist, die Wandlerschaltung (9) anzusteuern;
einen Glättungskondensator (14), der dazu ausgelegt ist, einen Strom, der von der Wandlerschaltung (9) ausgegeben wird, zu glätten; und
einen Steuerbereich (15), der dazu ausgelegt ist, eine Trägerwelle einer Frequenz, die niedriger oder gleich 10 kHz ist, zu verwenden, um den Ansteuerbereich (11a, 11b) zu steuern, wobei
der Steuerbereich (15) sowohl eine Signalwelle (A1) eines Modulationsfaktors, der einer Last (2) entspricht, als auch die Trägerwelle (A0) verwendet, um ein PWM-Signal (S1) zu erzeugen, und das PWM-Signal (S1) dem Ansteuerbereich (11a, 11b) bereitstellt, um zum Unterdrücken von Oberschwingungsströmen eine PWM-Wandlersteuerung durchzuführen, und
der Ansteuerbereich (15) in einer Niederlastregion, in der die Last (2) relativ niedrig ist, keine PWM-Wandlersteuerung durchführt, um die Schaltvorrichtung (7a, 7b) ein- und auszuschalten, und die PWM-Wandlersteuerung in einer Hochlastregion, in der die Last (2) relativ hoch ist, durchführt.

2. Antriebssteuerung (1) nach Anspruch 1, die ferner einen Eingangsstromdetektionsbereich (12) umfasst, der dazu ausgelegt ist, einen Eingangsstrom an der Wandlerschaltung (9) zu detektieren, wobei
der Ansteuerbereich (15) in der Niederlastregion, in der der Eingangsstrom relativ klein ist, die PWM-Wandlersteuerung nicht durchführt und die PWM-Wandlersteuerung in der Hochlastregion, in der der Eingangsstrom relativ groß ist, durchführt.

3. Antriebssteuerung (1) nach Anspruch 2, wobei der Eingangsstrom zu einer Zeit des Schaltens von einem EIN-Zustand, in dem die PWM-Wandlersteuerung durchgeführt wird, in einen AUS-Zustand, in der die PWM-Wandlersteuerung nicht durchgeführt wird, kleiner ist als der Eingangsstrom zu einer Zeit des Schaltens von einem AUS-Zustand, in dem die PWM-Wandlersteuerung nicht durchgeführt wird, in einen EIN-Zustand, in der die PWM-Wandlersteuerung durchgeführt wird.

4. Antriebssteuerung (1) nach einem der Ansprüche 1 bis 3, die ferner einen Phasendetektionsbereich (13) umfasst, der dazu ausgelegt ist, eine Phase der Wechselstromversorgung (AC) zu detektieren, wobei
der Steuerbereich (15) die detektierte Phase verwendet, um das PWM-Signal (S1) zu erzeugen, das mit der Phase der Wechselstromversorgung (AC) synchronisiert oder von derselben verschoben ist.

5. Antriebssteuerung (1) nach einem der Ansprüche 1 bis 4, wobei der Steuerbereich den Modulationsfaktor in Abhängigkeit von der Last (2) oder vom Eingangsstrom variabel einstellt.

6. Antriebssteuerung (1) nach einem der Ansprüche 1 bis 5, wobei
die Schaltvorrichtung (7a, 7b) mit jeder eines Paares von Gleichrichtervorrichtungen (6a, 6b) parallel geschaltet ist und
dem Paar der Schaltvorrichtungen (7a, 7b) vom Ansteuerbereich (11a, 11b) jeweils dasselbe PWM-Signal (S1) zugeführt wird.

7. Antriebssteuerung (1) nach einem der Ansprüche 1 bis 6, wobei
die Schaltvorrichtung (7a, 7b) mit jeder des Paares von Gleichrichtervorrichtungen (6a, 6b) parallel geschaltet ist und
der Steuerbereich (15) ein Paar der Schaltvorrichtungen (7a, 7b) über ein gesamtes Segment einschaltet, in dem die PWM-Wandlersteuerung an der anderen Schaltvorrichtung (7a, 7b) durchgeführt wird.

8. Antriebssteuerung (1) nach einem der Ansprüche 1 bis 7, die ferner einen Eingangsspannungsdetektionsbereich (16) umfasst, der dazu ausgelegt ist, eine Eingangsspannung an der Wandlerschaltung (9) zu detektieren, wobei
der Steuerbereich (15) auf Basis der Eingangsspannung eine Obergrenze des Modulationsfaktors einstellt.

9. Antriebssteuerung nach einem der Ansprüche 1 bis 8, wobei die Last ein Motor ist, der in einem Verdichter verwendet wird, der eine Klimaanlage konstituiert.

10. Motor, der die Antriebssteuerung nach einem der Ansprüche 1 bis 9 umfasst.

11. Verdichter, der Folgendes umfasst:
den Motor nach Anspruch 10;
einen Verdichtungsmechanismus, der dazu ausgelegt ist, vom Motor angetrieben zu werden, um ein Fluid zu verdichten; und
ein Gehäuse, das den Motor und den Verdichtungsmechanismus umschließt.

12. Verdichter nach Anspruch 11, wobei der Steuerbereich die PWM-Wandlersteuerung nicht durchführt, wenn eine Rotationsgeschwindigkeit des Verdichtungsmechanismus relativ niedrig ist, und die PWM-Wandlersteuerung durchführt, wenn die Rotationsgeschwindigkeit relativ hoch ist.

13. Verdichter nach Anspruch 11 oder 12, wobei der Verdichter eine Klimaanlage konstituiert.

14. Verfahren zum Steuern einer Wandlereinheit, wobei die Wandlereinheit eine Drossel, die mit einer Wechselstromversorgung verbunden ist, eine Wandlerschaltung, die eine Gleichrichtervorrichtung und eine Schaltvorrichtung, die mit der Gleichrichtervorrichtung parallel geschaltet ist, beinhaltet, einen Glättungskondensator, der dazu ausgelegt ist, einen Strom, der von der Wandlerschaltung ausgegeben wird, zu glätten, und einen Steuerbereich, der dazu ausgelegt ist, einen Ansteuerbereich, der die Wandlerschaltung ansteuert, zu steuern, beinhaltet, wobei das Verfahren Folgendes umfasst:
Erzeugen eines PWM-Signals unter Verwendung sowohl einer Signalwelle eines Modulationsfaktors, der einer Last entspricht, als auch einer Trägerwelle einer Frequenz, die niedriger oder gleich 10 kHz ist, zum Unterdrücken von Oberschwingungsströmen sowie Ansteuern der Wandlerschaltung und
Durchführen einer PWM-Wandlersteuerung, um die Schaltvorrichtung in einer Hochlastregion, in der die Last relativ hoch ist, ein- und auszuschalten, ohne die PWM-Wandlersteuerung in einer Niederlastregion, in der die Last relativ niedrig ist, durchzuführen.

15. Verfahren zum Steuern der Wandlereinheit nach Anspruch 14, wobei die PWM-Wandlersteuerung in der Niederlastregion, in der ein Eingangsstrom an der Wandlerschaltung relativ klein ist, nicht durchgeführt wird und die PWM-Wandlersteuerung in der Hochlastregion, in der der Eingangsstrom relativ groß ist, durchgeführt wird.

## Revendications

1. Dispositif de commande (1) comprenant :
un convertisseur (10) et un onduleur (20) configuré pour convertir un courant continu fourni par le convertisseur (10) en un courant alternatif, pour fournir le courant alternatif à une charge (2),
ledit convertisseur (10) comprenant :
une bobine de réactance (5) connectée à une alimentation électrique en courant alternatif (AC) ;
un circuit convertisseur (9) comportant deux dispositifs de redressement (6a, 6b) et deux dispositifs de commutation (7a, 7b), chaque dispositif de commutation (7a, 7b) étant connecté en parallèle à un dispositif de redressement (6a, 6b) ;
une section de pilotage (11a, 11b) configurée pour piloter le circuit convertisseur (9) ;
un condensateur de lissage (14) configuré pour lisser un courant sortant du circuit convertisseur (9) ; et
une section de commande (15) configurée pour utiliser une onde porteuse d'une fréquence égale ou inférieure à 10 kHz pour commander la section de pilotage (11a, 11b), dans lequel
la section de commande (15) utilise à la fois une onde de signal (A1) d'un facteur de modulation correspondant à une charge (2) et l'onde porteuse (A0), pour générer un signal PWM (modulation d'impulsions en durée) (S1), et fournit le signal PWM (S1) à la section d'attaque (11a, 11b) pour effectuer une commande de convertisseur PWM afin de supprimer les harmoniques de ligne électrique, et
la section de commande (15) n'effectue pas de commande de convertisseur PWM pour mettre en marche et à l'arrêt le dispositif de commutation (7a, 7b) dans une région de faible charge dans laquelle la charge (2) est relativement faible, et effectue la commande de convertisseur PWM dans une région de charge élevée dans laquelle la charge (2) est relativement élevée.

2. Dispositif de commande (1) selon la revendication 1, comprenant en outre une section de détection de courant d'entrée (12) configurée pour détecter un courant d'entrée au circuit convertisseur (9), dans lequel
la section de commande (15) n'effectue pas de commande de convertisseur PWM dans la région de faible charge dans laquelle le courant d'entrée est relativement petit, et effectue la commande de convertisseur PWM dans la région de charge élevée dans laquelle le courant d'entrée est relativement important.

3. Dispositif de commande (1) selon la revendication 2, dans lequel le courant d'entrée, au moment de la commutation d'un état MARCHE où la commande de convertisseur PWM est effectuée vers un état ARRÊT où la commande de convertisseur PWM n'est pas effectuée, est plus petit que le courant d'entrée au moment de la commutation de l'état ARRÊT où la commande de convertisseur PWM n'est pas effectuée vers l'état MARCHE où la commande de convertisseur PWM est effectuée.

4. Dispositif de commande (1) selon l'une quelconque des revendications 1 à 3, comprenant en outre une section de détection de phase (13) configurée pour détecter une phase de l'alimentation électrique en courant alternatif (AC), dans lequel
la section de commande (15) utilise la phase détectée pour générer le signal PWM (S1) qui est synchronisé avec ou décalé de la phase de l'alimentation électrique en courant alternatif (AC).

5. Dispositif de commande (1) selon l'une quelconque des revendications 1 à 4, dans lequel la section de commande règle de manière variable le facteur de modulation en fonction de la charge (2) ou du courant d'entrée.

6. Dispositif de commande (1) selon l'une quelconque des revendications 1 à 5, dans lequel
le dispositif de commutation (7a, 7b) est connecté en parallèle à chacun des deux dispositifs de redressement (6a, 6b), et
les deux dispositifs de commutation (7a, 7b) sont chacun alimentés par le même signal PWM (S1) de la section de pilotage (11a, 11b).

7. Dispositif de commande d'attaque (1) selon l'une quelconque des revendications 1 à 6, dans lequel
le dispositif de commutation (7a, 7b) est connecté en parallèle à chacun des deux dispositifs de redressement (6a, 6b), et
la section de commande (15) met en marche l'un des deux dispositifs de commutation (7a, 7b) sur un segment entier, dans lequel la commande de convertisseur PWM est effectuée sur l'autre dispositif de commutation (7a, 7b).

8. Dispositif de commande (1) selon l'une quelconque des revendications 1 à 7, comprenant en outre une section de détection de tension d'entrée (16) configurée pour détecter une tension d'entrée au circuit convertisseur (9), dans lequel
la section de commande (15) règle une limite supérieure du facteur de modulation sur la base de la tension d'entrée.

9. Dispositif de commande selon l'une quelconque des revendications 1 à 8, dans lequel la charge est un moteur utilisé dans un compresseur constituant un climatiseur.

10. Moteur comprenant le dispositif de commande selon l'une quelconque des revendications 1 à 9.

11. Compresseur comprenant :
le moteur selon la revendication 10 ;
un mécanisme de compression configuré pour être attaqué par le moteur afin de comprimer un fluide ; et
un logement qui loge le moteur et le mécanisme de compression.

12. Compresseur selon la revendication 11, dans lequel la section de commande n'effectue pas la commande de convertisseur PWM lorsqu'une vitesse de rotation du mécanisme de compression est relativement faible, et effectue la commande de convertisseur PWM lorsque la vitesse de rotation est relativement élevée.

13. Compresseur selon la revendication 11 ou 12, dans lequel le compresseur constitue un climatiseur.

14. Procédé de commande d'un convertisseur, le convertisseur comportant une bobine de réactance connectée à une alimentation électrique en courant alternatif, un circuit convertisseur comportant un dispositif de redressement et un dispositif de commutation qui est connecté en parallèle au dispositif de redressement, un condensateur de lissage configuré pour lisser un courant sortant du circuit convertisseur, et une section de commande configurée pour commander une section de pilotage qui pilote le circuit convertisseur, le procédé comprenant :
la génération d'un signal PWM afin de supprimer les harmoniques de ligne électrique, en utilisant à la fois une onde de signal d'un facteur de modulation correspondant à une charge et une onde porteuse d'une fréquence égale ou inférieure à 10 kHz, et l'attaque du circuit convertisseur ; et
la réalisation d'une commande de convertisseur PWM pour mettre en marche et à l'arrêt le dispositif de commutation dans une région de charge élevée dans laquelle la charge est relativement élevée, sans effectuer la commande de convertisseur PWM dans une région de faible charge dans laquelle la charge est relativement faible.

15. Procédé de commande du convertisseur selon la revendication 14, dans lequel la commande de convertisseur PWM n'est pas effectuée dans la région de faible charge dans laquelle un courant d'entrée au circuit convertisseur est relativement petit, et la commande de convertisseur PWM est effectuée dans la région de charge élevée dans laquelle le courant d'entrée est relativement important.
